# EUROPEAN PATENT APPLICATION

(11) **EP 3 862 282 A1**
(43) Date of publication of application: **11.08.2021**
(21) Application number: 21155183.3
(22) Date of filing: 04.02.2021
(51) Int. Cl.: B65B 27/10, B65B 35/50, B65G 57/03, B65G 57/06

(54) **MACHINE FOR PACKAGING FIREWOOD**

(30) Priority: 04.02.2020 IT 202000002161
(71) Applicant: Moresi, Ludovico, 22010 Carlazzo (CO) (IT)
(72) Inventor: Moresi, Ludovico, 22010 Carlazzo (CO) (IT)
(74) Representative: Franzolin, Luigi

(57) **Abstract**

A machine for packing firewood including a rectangular-section container (11) configured to receive a plurality of wood logs (3) oriented horizontally to form a stack (5) and having an upper opening (10) for the entry of the logs (3) and a lower side opening (19) for the exit thereof, a cutting unit (6) configured to cut the stack (5) along a cutting plane (T) placed at a predetermined height relative to a bottom plane (17) of the container (11) to separate a bundle (2) from the stack (5) and thrust means (36) to extract the bundle (2) from the side opening (19) of the container (11); the container (11) includes a first horizontal wall (23) mobile vertically between a raised position placed in the vicinity of the cutting plane (T) and a lowered position defining the bottom plane (17) of the container (11) so as to guide the descent of the stack (5) after the cutting and extraction step and consequently reducing the risk of misalignment of the logs, ensuring a regular stacking of the logs and an optimal conformation of the bundles (2).

## Description

### CROSS-REFERENCE TO RELATED APPLICATIONS

This Patent Application claims priority from Italian Patent Application No. 102020000002161 filed on February 4, 2020.

### TECHNICAL FIELD

The present invention relates to a machine for packing firewood.

### BACKGROUND ART

Firewood is normally supplied in the form of logs loaded in bulk on pallets or packaged in bundles of substantially circular cross section.

Bulk packaging on pallets is suitable for supplies of relatively large quantities of wood, and assumes that the user has storage space for one or more whole pallets, as well as an adequate access route to that space. If at least one of the above requirements is not met, the pallet must be unpacked and the loose wood stored, which is time-consuming and labour intensive.

Bundling is suitable for smaller quantities or situations where there is not adequate space available for pallet access and/or storage.

In the prior art, the formation of the bundles is substantially manual and therefore labour-intensive.

WO2019/142174 describes a method for packing firewood into parallelepiped bundles which solves at least part of the above problems, as the formation of the bundles is automated. According to this known method, the logs are loaded from above horizontally within a rectangular-section container to form a stack. The stack is cut at a predetermined height from a bottom plane of the container so as to form a parallelepiped bundle, and the bundle thus formed is pushed out of the container through a side opening thereof and strapped.

A problem connected with this technique is related to the correct alignment of the logs in the container. A misalignment of the logs can in fact lead to the formation of bundles of irregular shape or dimensions.

### DISCLOSURE OF INVENTION

The object of the present invention is to realize a packaging machine which enables to solve the above specified problems related to the prior arts.

The aforementioned purpose is achieved by a machine for packing firewood including:
a rectangular-section container configured to receive a plurality of wood logs oriented horizontally to form a stack, the container having an upper opening for the entry of the logs and a lower side opening for the exit thereof;
a cutting unit configured to cut the stack along a cutting plane placed at a predetermined height relative to a bottom plane of the container to separate a bundle from the stack;
thrust means to extract the bundle from the side opening for the exit of the container;
characterized in that the container includes a first horizontal wall mobile vertically between a raised position placed in the vicinity of the cutting plane and a lowered position defining the bottom plane of the container.

Thanks to this solution, the descent of the stack after the cutting and bundle extraction step is guided and consequently the risk of misalignment of the logs is reduced, ensuring a regular stacking of the logs and an optimal conformation of the bundles.

### BRIEF DESCRIPTION OF THE DRAWINGS

This and other advantages of the present invention will be apparent from examination of the form of embodiment described below and shown in the accompanying drawings, in which:
Figure 1 is a side elevation view of the machine for packing firewood according to the invention;
Figure 2 is a partial perspective view of the machine of Figure 1;
Figure 3 is a partial section according to line III-III of Figure 2;
Figures 4, 5 and 6 are longitudinal centreline sections of the machine of Figure 1, in various operating positions;
Figure 7 is a plan view from above of an unloading unit of the machine of Figure 1; and
Figure 8 is a longitudinal view from the exit side of the unloading unit in Figure 7.

### BEST MODE FOR CARRYING OUT THE INVENTION

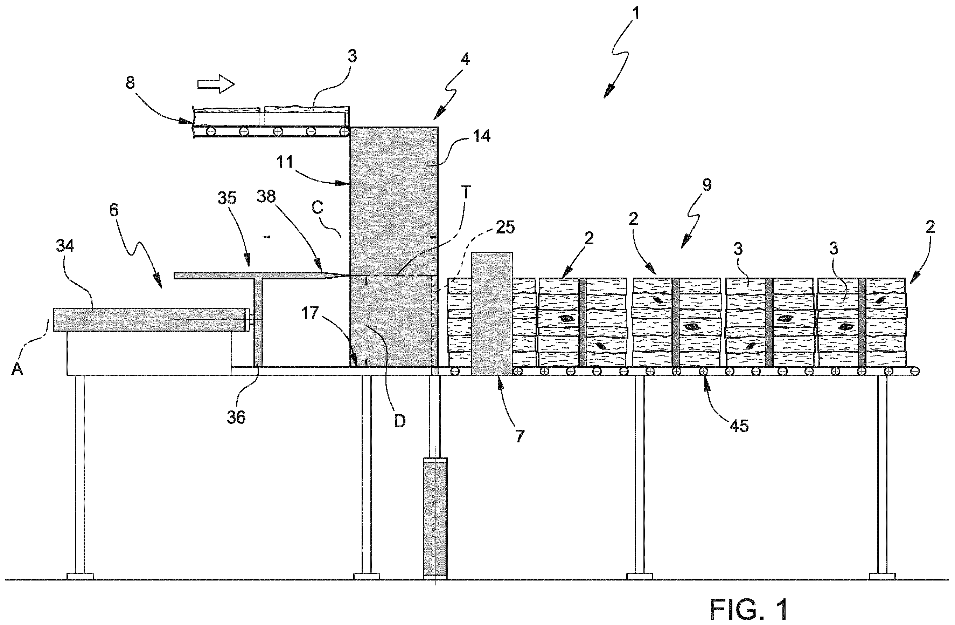

With reference to Figure 1, number 1 denotes as a whole a machine for making bundles 2 of logs 3 of firewood according to the present invention.

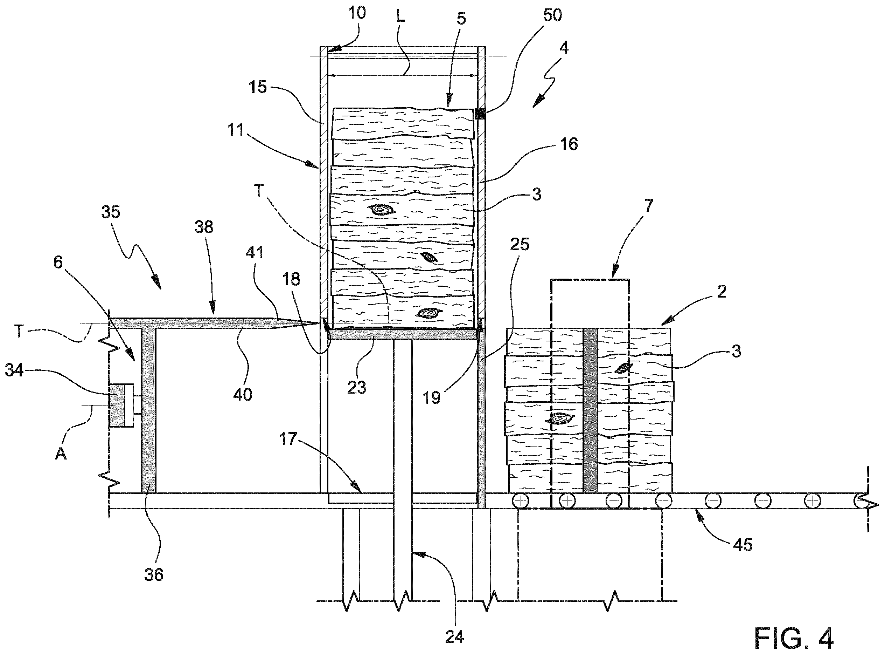

The machine 1 essentially comprises a forming unit 4 to form a stack 5 (Figures 4-6) of horizontally arranged logs 3, a cutting unit 6 for separating the bundles 2 from the stack 5, a strapping device 7 for strapping the formed bundles 2, a feed unit 8 to feed the logs 3 and an unloading unit 9 of the formed bundles 2.

More particularly, the forming unit 4 (Figures 4-6) essentially comprises a container 11 in the shape of a parallelepiped elongated in a vertical direction and having an upper opening 10 for the entry of the logs 3 with dimensions equal to the cross section of the container.

The cross section of the container has a longitudinal side of length L approximating by excess the length of the logs 3, and a transversal side of a length preferably, but not necessarily, equal to L.

The container 11 includes a pair of longitudinal side walls 14 extending for the entire height of the container; the side walls 14 may be continuous or also interrupted along a central vertical band.

The container 11 further comprises two transversal side walls 15, 16 (Figures 4-6), each of which is interrupted at a predetermined distance from a bottom plane 17 to form respective openings 18, 19 with a width equal to the width of the container 11.

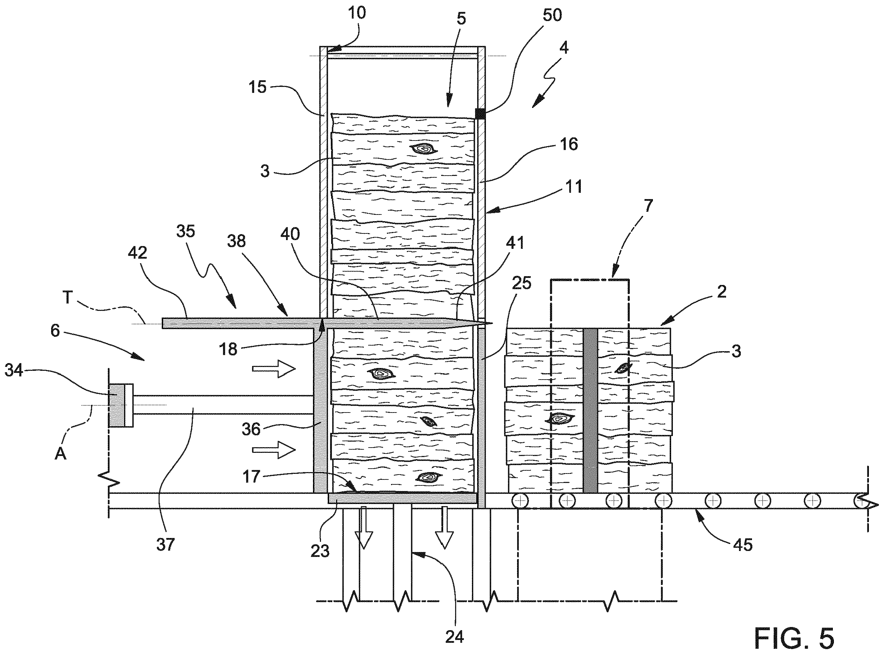

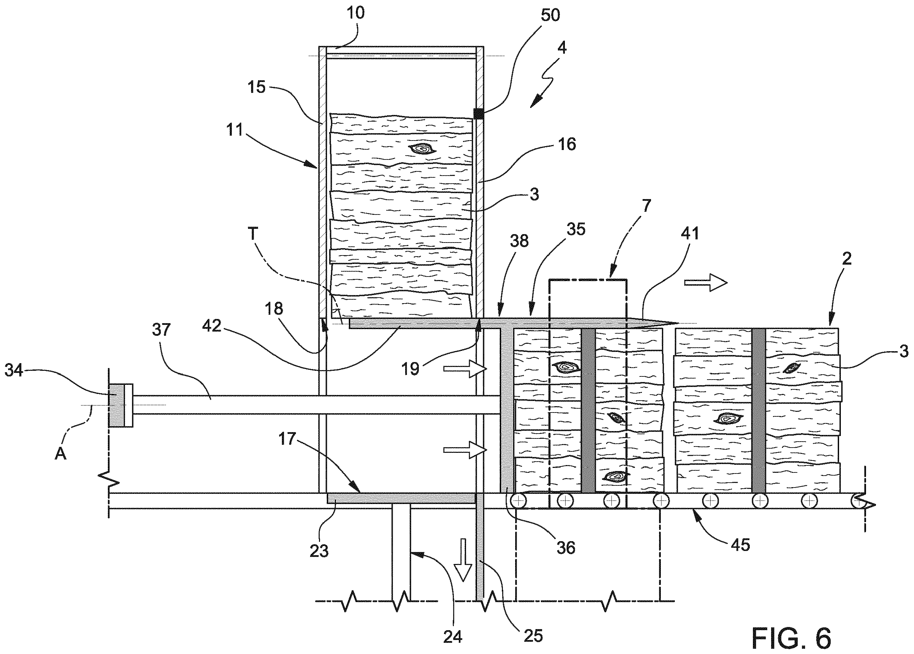

The forming unit 4 further comprises a first horizontal movable wall 23 having a quadrangular shape and dimensions approximating by default those of the cross section of the container 11. The first movable wall 23 is mobile vertically within the container 11 between a lowered position defining the bottom plane of the container (Figures 5 and 6) and a raised position in the vicinity of a cutting plane T, as will be better described below (Figure 4) . The motion of the first movable wall 23 is controlled in any known manner, for example by a hydraulic cylinder 24.

Finally, the forming unit 4 comprises a second movable wall 25 substantially coplanar to the side wall 16 and vertically guillotine-mobile between a forward position (Figures 4 and 5) in which it closes the opening 19 and a backward position (Figure 6) below the bottom surface 17 of the container 11.

The cutting unit 6, in the shown example, consists of a log splitter facing the opening 18 of the wall 15 of the container 11. The log splitter 6 is provided with a horizontal A-axis hydraulic cylinder 34, and a tool 35 described below.

The tool 35 essentially comprises a thrust plate 36 fixed to a free end of a rod 37 of the cylinder 34, orthogonal to the axis A and facing the opening 18, and a cutting plate 38 integrally fixed to an upper edge of the thrust plate 36 and arranged horizontally on a cutting plane T placed immediately below an upper side of the opening 18, at a distance D from the bottom plane 17 of the container 11 preferably equal to the internal transversal dimensions L of the container. Such dimensions are conveniently chosen so that the resulting bundle 2 has a weight manageable by an adult person (10-20 kg).

The thrust plate 36 and the cutting plate 38 have dimensions so that they pass through the opening 18. The cutting plate 38 extends longitudinally from opposite parts of the thrust plate 36, and is subdivided from the thrust plate 36 into a cutting portion 40 terminating in a wedge-shaped cutting edge 41 (hereinafter "the wedge 41" for brevity's sake) facing the container 11, and in a support portion 42 facing the cylinder 34; each of the portions 40, 42 of the cutting plate 38 extends longitudinally for a length substantially equal to the inner longitudinal extent of the container 11.

In the backward position of the rod 37 (shown in Figures 1 and 4), the wedge 41 is extracted from the container 11; the stroke C of the cylinder 34 is such as to bring the thrust plate 36 beyond the second movable wall 25 in the extracted position of the rod 37 (Figure 6).

A roller plane 45 is arranged downstream of the container 11 for the sliding of the formed bundles 2 (Figure 1). The strapping device 7 may comprise an automatic in-line strapping machine of known type. The strapping device 7 is arranged downstream of the second movable wall 25 and is fed by the roller plane 45 that passes through it. Alternatively, the strapping device may be provided with its own inlet and outlet feed belts.

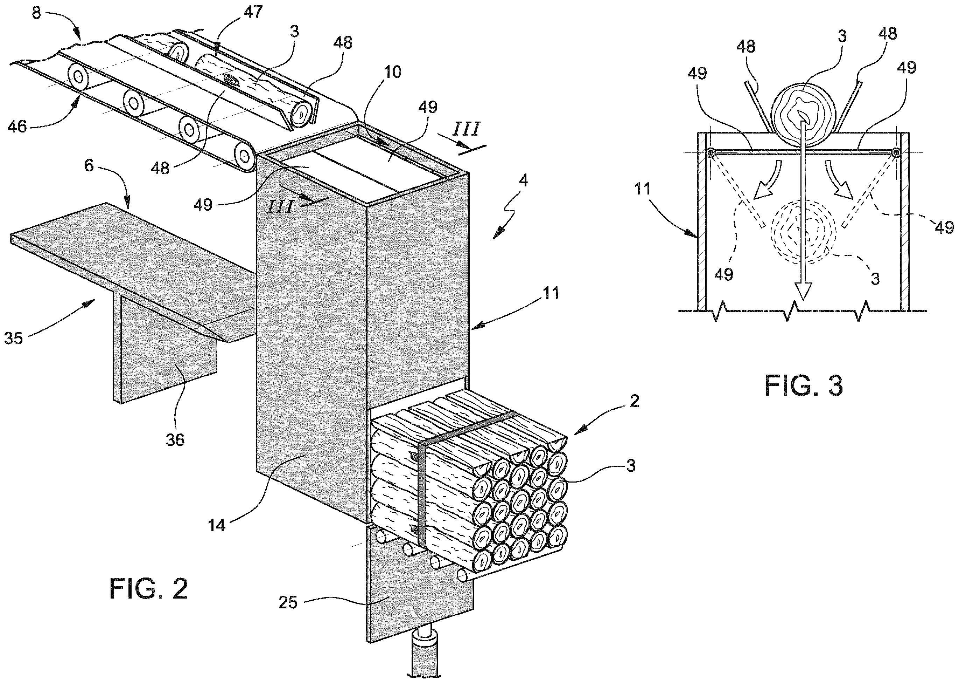

The feed unit 8 comprises a conveyor belt 46 on which the logs 3 are fed in a longitudinal direction by means of a guide device 47, consisting, for example, of a pair of guide walls 48 inclined so as to converge with each other towards the conveyor belt 46 (Figure 2). The two walls 48 are arranged at a relative distance so that the logs 3 are accommodated with a suitable side clearance.

The opening 10 of the container 11 is normally closed by a pair of bulkheads 49 (Figures 2 and 3), hinged to the container 11 along respective opposite side edges and movable between a closed position shown in Figure 3 with solid line and an opening position rotated downwards and shown with dotted line.

The opening of the bulkheads 49 may be, for example, simply controlled by the weight of the log 3, in which case the bulkheads 49 are held in the closed position by non-shown springs of suitable stiffness.

Alternatively, the bulkheads 49 may be actuated into opening by an actuator, such as an electric motor or fluid actuator, in response to an activation signal generated by a log presence sensor 3, of any known type.

Preferably, inside the container 11 there is a level sensor 50 configured to stop the feeding of the logs 3 by means of the conveyor belt 46 upon reaching a predetermined level of the stack 5. This level is conveniently as high as possible compatibly with the opening of the bulkheads 49.

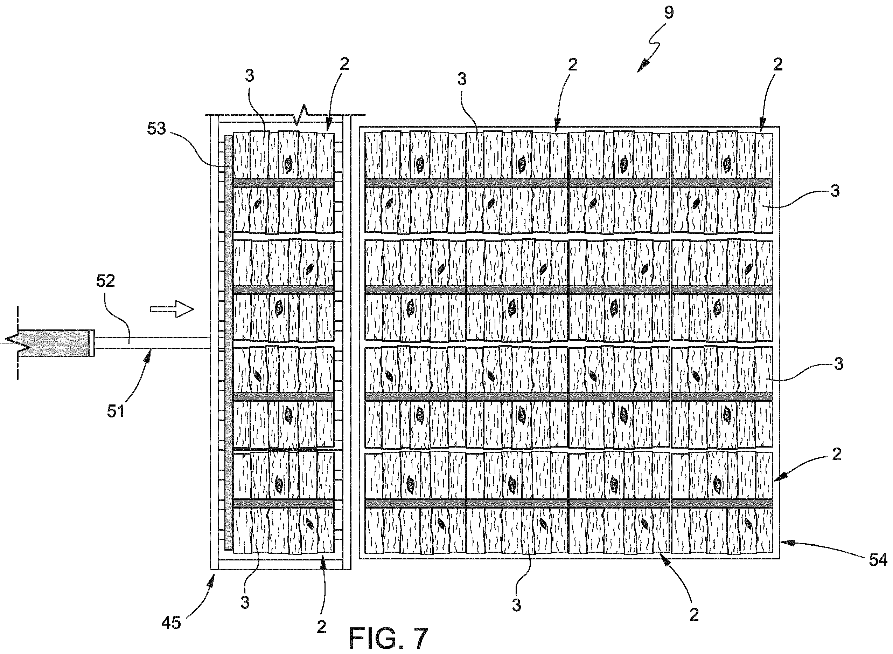

The unloading unit 9 (Figures 1, 7 and 8) comprises a hydraulic cylinder 51, arranged with horizontal axis perpendicular to the direction of advancement of the bundles 2 on the roller plane 45. The hydraulic cylinder 51 includes a rod 52 that controls a vertical thrust plate 53 parallel to the direction of advancement of the bundles 2 and having a length equal to a predetermined number of bundles 2, for example four.

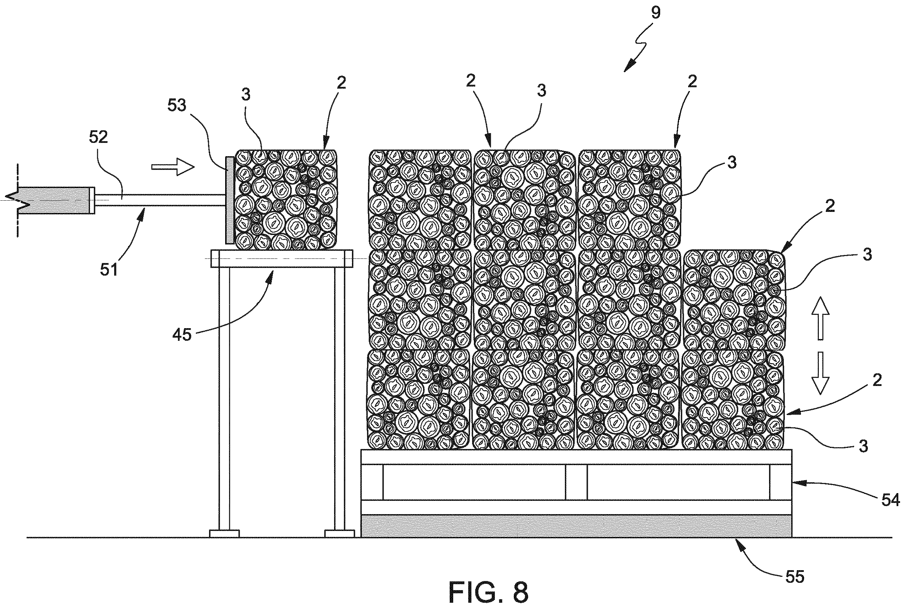

The thrust plate 53 is movable between a backward position in which it is alongside the roller plane 45 (Figure 8) and a forward position in which it unloads a row of bundles 2 onto a pallet 54 arranged on a vertically movable unloading platform 55.

The operation of the machine 1 is as follows.

Figure 4 shows a start-up step of the working cycle in which the first movable wall 23 is in the raised position arranged below and in the vicinity of the cutting plane T.

The logs 3 are fed in succession over the bulkheads 49 by the conveyor belt 46, arranged in a longitudinal direction thank to the guide device 47. In the presence of a log 3, the bulkheads 49 open, dropping the log 3 into the container 11.

By keeping the level of the stack 5 high thanks to the sensor 50 and ensuring that the logs 3 fall into the container 11 in a horizontal and longitudinal position thanks to the bulkheads 49, the risk of misalignment of the logs is reduced.

The bundles 2 are separated from the stack 5 in succession by the cutting unit 6, which is mobile of reciprocating motion by the effect of the hydraulic cylinder 34.

During an initial step of the stroke, the wedge 41 separates from the stack 5 a bundle 2 of logs of height D (Figure 1). The cutting step requires relatively little power thanks to the orientation of the logs in the longitudinal direction; in this way, the wedge 41 can easily penetrate between the wood fibres as it occurs in a conventional log splitter.

In this step, the second movable wall 25 is raised to keep the logs 3 in an axially fixed position during cutting.

When the thrust plate 36 comes in the vicinity of the bundle, the second movable wall 25 lowers releasing the opening 19, and the thrust wall 36 pushes the formed bundle 2 outside the container 11 through the opening 19 (Figure 6).

Having reached the end position, in which the thrust plate 36 is beyond the second movable wall 25, the formed bundle 2 is completely outside the container 11. The portion of the stack 5 arranged above the cutting plate 38 is supported in this step by the support portion 42 of the cutting plate 38.

In this position, the bundle 2 is already arranged in the strapping device 7, where a strap 46 of plastic or metallic material is applied. The bundle 2 is at this point complete.

Note how the advancement stroke of the rod 37, in addition to carrying out the cutting and extraction of the bundles 2 from the container 11, feeds step by step the bundles 2 along the roller plane 45.

During the return stroke, as soon as the thrust wall 36 has exited the container 11, the first movable wall 23 rises, arranging itself immediately below the cutting portion 40.

Therefore, when the cutting portion 40 exits the container 11, the stack 5 is supported by the first movable wall 23, preventing the stack 5 from freely falling to the bottom of the container 11. At this point, the second movable wall 25 raises, restoring the lateral containment for the logs 3, and the first movable wall 23 lowers to the bottom plane 17 of the container 11 to prepare the machine for a subsequent cutting cycle.

At each advancement stroke of the rod 37, a bundle 2 is therefore ejected from the container 11, causing each of the bundles 2 present on the roller plane 45 to advance. When the number of bundles 2 present on the roller plane 45 is equal to a predetermined value, for example four, the group of bundles produced is unloaded transversely from the roller plane 45 onto the pallet 54 by means of the unloading unit 9. This happens, in succession, for a predetermined number of groups of bundles, for example four more; the thrust exerted by the piston 51 during the unloading of a group of bundles 2 produces the lateral displacement on the pallet of the groups of bundles previously deposited on the pallet until the surface of the pallet is completely covered (in the shown example with four rows of four bundles 2 each, for a total of sixteen bundles).

Once one layer is completed, the unloading platform 55 on which the pallet 54 rests is lowered by a distance equal to the height of the bundles 2 and, in a manner entirely analogous to that previously described, the next layer is formed.

The cycle is completed when the pallet 54 is loaded with a predetermined number of layers of bundles 2, such as three, for a total of forty-eight bundles 2.

The pallet 54 may now be removed and, if necessary, strapped and packaged with a water-resistant foil material according to known procedures not described herein.

Finally, it is clear that modifications and variations may be made to the machine and the packaging method described which do not go beyond the scope of protection of the invention as defined by the claims.

The cutting operation, which in the example described is carried out with a log splitter that also performs the extraction step, can be carried out with any other cutting method (disk, belt, chain, or even by means of laser).

The movement of the first movable wall 23 and of the second movable wall 25 may be performed in any manner and by any type of actuator (for example pneumatic or electric).

The feed unit 8 may be made otherwise. In particular, two or more guide devices 47 may be provided in parallel. The conveyor belt 46 may be arranged transversely rather than longitudinally, and advance the logs 3 in a direction transversal to the conveyor belt but still longitudinal to the cutting direction.

The bulkheads 49 could be replaced by any device configured to keep the logs 3 in a horizontal and orderly position before falling into the container 11.

The bundles 2 can be unloaded in any other manual or automatic way.

## Claims

1. A machine for packing firewood including:
a rectangular-section container (11) configured to receive a plurality of wood logs (3) oriented horizontally to form a stack (5), the container (11) having an upper opening (10) for the entry of the logs (3) and a lower side opening (19) for the exit thereof;
a cutting unit (6) configured to cut the stack (5) along a cutting plane (T) placed at a predetermined height relative to a bottom plane (17) of the container (11) to separate a bundle (2) from the stack (5);
thrust means (36) to extract the bundle (2) from the side opening (19) of the container (11);
**characterized in that** the container (11) includes a first horizontal wall (23) mobile vertically between a raised position placed in the vicinity of the cutting plane (T) and a lowered position defining the bottom plane (17) of the container (11).

2. Machine as claimed in claim 1, **characterized in that** the cutting unit (6) includes a tool (35) provided with a cutting portion (40) and said thrust means (36), the tool (35) being movable between a backward position where the cutting portion (40) is outside the container (11) and a forward position where the formed bundle (2) is extracted from the container (11) through the side opening (19), the tool (35) also including a support portion (42) configured to support the stack (5) in the forward position of the tool (35).

3. Machine as claimed in claim 2, **characterized in that** the first wall (23) is movable from the raised to the lowered position when the tool (35) is in the rear position.

4. Machine as claimed in claim 2 or 3, **characterized in that** the first movable wall (23) is placed in the lowered position during a travel of the tool (35) between the rear and the forward position.

5. Machine as claimed in claim 2 to 4, **characterized in that** the thrust means consists of a vertical thrust plate (36) and that the cutting portion (40) is a portion of a horizontal cutting plate (38) having a wedge edge (41) and extending from the thrust plate (36).

6. Machine as claimed in claim 5, **characterized in that** the support portion (42) is a portion of the cutting plate (38) arranged on the opposite side of the thrust plate (36) with respect to the cutting portion (40) and configured to support the stack (5) when the bundle (2) is removed from the container (11).

7. Machine as claimed in one of the previous claims, **characterized by** including a second vertical wall (25) movable between an advanced position in which it closes the side opening (19) during a cutting phase and a backward position in which it clears the side opening (19).

8. Machine as claimed in claim 6 or 7, **characterized in that** the container (11) includes an opening (18) for the entry of the tool (35) facing said lateral opening (19).

9. Machine as claimed in claim 7 or 8, **characterized by** including a strapping device (7) placed downstream of the second movable wall (25).

10. Machine as claimed in one of the above claims, **characterized by** including a feed unit (8) to feed the logs (3) in succession to the upper opening (10) of the container (11).

11. Machine as claimed in claim 10, **characterized by** including at least one bulkhead (49) configured to selectively close the upper opening (10) of the container (11), the bulkhead being configured to open in the presence of at least one log (3).

12. Machine as claimed in claim 11, **characterized by** including a level sensor (50) configured to stop the feeding of the logs (3) by means of the feed unit (8).

13. Machine as claimed in one of the previous claims, **characterized by** including an automatic unloading unit (9).

14. Machine as claimed in claim 13, **characterized in that** the unloading unit (9) includes a vertically mobile unloading platform (55) and a thrust device to unload groups of bundles (2) from an exit of the container (11) to the unloading platform (55).
